# EUROPEAN PATENT APPLICATION

(11) **EP 2 493 161 A1**
(43) Date of publication of application: **29.08.2012**
(21) Application number: 11156080.1
(22) Date of filing: 25.02.2011
(51) Int. Cl.: H04M 1/725, H04W 52/02

(54) **Method and apparatus for managing power levels in a handheld mobile communication device**

(71) Applicant: Research In Motion Limited, Waterloo, ON N2L 3W8 (CA)
(72) Inventor: Prabu, Ganesh J., Irving, TX 75039 (US)
(74) Representative: Roberts, Gwilym Vaughan

(57) **Abstract**

A method includes: monitoring a battery charge level in a mobile communication device operable to receive new e-mail messages when an e-mail polling operation is executed; and varying an email polling interval as a function of the battery charge level.

## Description

The present disclosure relates generally to telecommunications devices, and more particularly to a method and apparatus for managing power levels in a portable electronic device such as a handheld mobile communication device.

### BACKGROUND

There are many portable electronic devices that may include a portable power supply. Such devices may be handheld, that is, sized to be held or carried in a human hand. Many such handheld devices, such as smart phones and portable computers, may include communication capability, that is, the capability to support (typically wirelessly) voice or data communications or both. A typical power supply for a portable electronic device may be a conventional battery, but portable electronic devices may also be powered by portable power supplies other than or in addition to a battery, such as a fuel cell or solar cell. In addition, the device may be capable of receiving power from a wired power source, which is a source typically connected to the device by a wire and that is not as portable or as mobile as the device. When the device is not connected to a wired power source and is instead relying on the device's own power supply for device operations, the capacity and the discharge rate of the power source determines how long the device can function. In the case of a mobile communication device, the power source's capacity and discharge rate affects how long data or voice communications can take place. Given the amount of power required for radio transmission from the device to a wireless communications radio tower, and radio reception at the device, the device operating system typically requires the power source to be capable of meeting power demands. In the typical case in which the power supply includes a battery, this may mean that the device operating system generally requires the battery to be charged to at least a minimum specified level. Below this level, the device operating system may automatically shut down some or all device functions until the battery can be recharged and the battery charge level is once again above the minimum threshold.

### SUMMARY

In aspect of the present disclosure, there is provided a method including: monitoring a battery charge level in a mobile communication device operable to receive new e-mail messages when an e-mail polling operation is executed; and varying an email polling interval as a function of the battery charge level.

In another aspect of the present disclosure, there is provided a mobile communication device operable to receive new e-mail messages when an email polling operation is executed, the device including: a processor in electrical communication with a battery for monitoring a battery charge level and varying an e-mail polling interval as a function of the battery charge level; and a memory in electrical communication with the processor and a communication subsystem for storing the e-mail polling interval.

### BRIEF DESCRIPTION OF THE DRAWINGS

Embodiments of the present disclosure will now be described, by way of example only, with reference to the attached figures, wherein:

FIG. 1 is a schematic block diagram of various components of a handheld communication device;

FIG. 2 is an illustrative front view of a handheld communication device including the various components as shown in FIG. 1;

FIG. 3 is a schematic block diagram of a network environment in which the device of FIG. 1 and FIG. 2 may operate;

FIG. 4 is a schematic block diagram in accordance with an embodiment;

FIG. 5A and FIG. 5B are illustrative displays in the handheld communications device showing the availability of certain device functions and status of certain device resources;

FIG. 6 is a flow chart of a method in accordance with an embodiment; and

FIG. 7 is a flow chart of a method in accordance with an embodiment.

### DETAILED DESCRIPTION

As noted above, the present disclosure relates to an apparatus and method for managing power consumption in a portable electronic device, and in particular, a mobile communication device. The mobile communication device is typically handheld. Further, the mobile communication device is adapted for e-mail communications, meaning that the mobile communication device is capable of receiving (and usually sending) e-mail messages wirelessly. The mobile communication device includes a power supply, for which power is consumed. As power is consumed, the power supply's capability of meeting power demands is reduced. Although the concepts described in more detail below are not limited to any particular power supply, the concepts will be described for simplicity with reference to a battery, and the capability of the battery to supply power will be described in terms of the battery charge level (or a function of the battery charge level, such as a rate of change in the battery charge level).

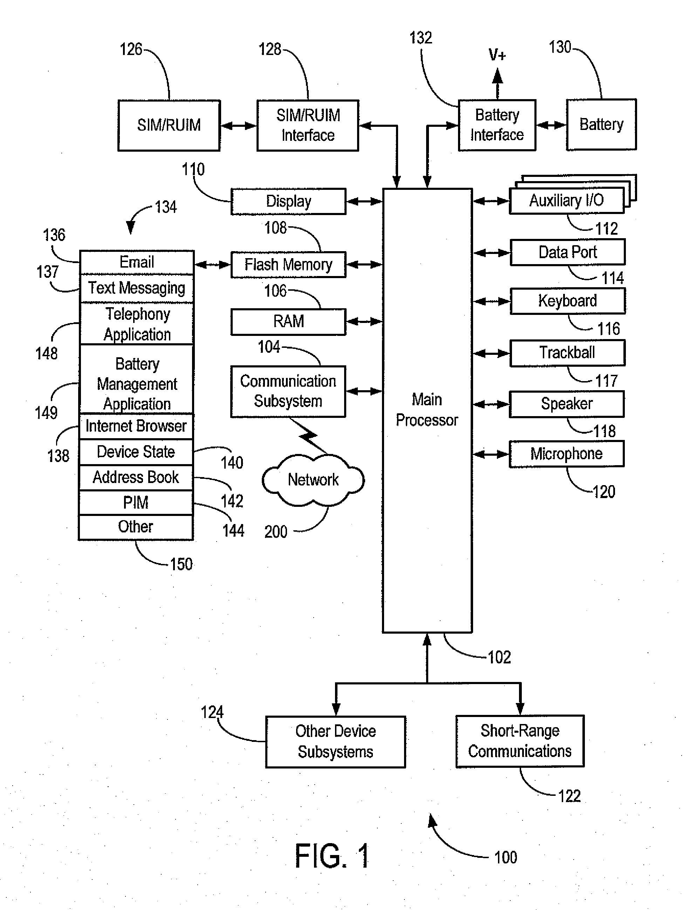

In an illustrative embodiment, the principles of the present disclosure may be practiced with a mobile communication device in a wireless operating environment. Shown in FIG. 1 is a schematic block diagram of an illustrative mobile communication device 100. The communication device 100 may comprise a number of components, including a main processor 102 which controls the overall operation of communication device 100. Communication functions, including data and voice communications, may be performed through a communication subsystem 104. The communication subsystem 104 may receive messages from and send messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a speaker 118, an environmental sensor 119 (such as a thermometer for sensing the environmental temperature, and a barometer for sensing the environmental humidity), a microphone 120, short-range communications 122 and other device subsystems 124. In some embodiments, the keyboard 116 may comprise a virtual keyboard or a physical keyboard or both. Keyboard 115 may further include navigation keys which enable movement of a cursor and selection of various objects displayed in display 110. In some embodiments, the display 110 may comprise a touch screen display allowing direct selection of displayed objects.

Some of the subsystems of the communication device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

Operating system software used by the main processor 102 is typically stored in a persistent store such as flash memory 108. Those skilled in the art will appreciate that the operating system, specific device applications, or parts thereof, may be temporarily loaded into a volatile store such as the RAM 106.

The communication device 100 may send and receive communication signals over the wireless network 200 after required network registration or activation procedures have been completed. Network access may be associated with a subscriber or user of the communication device 100.

The communication device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communication device 100.

The main processor 102, in addition to its operating system functions, enables execution of various software applications 134 on the communication device 100. A subset of software applications 134 that control basic device operations, including data and voice communication applications, will normally be installed on the communication device 100 during its manufacture.

To identify a user, the communications device 100 may use a SIM/RUIM/USIM card 126 (i.e. Subscriber Identity Module or a Removable User Identity Module or a Universal Subscriber Identity Module, etc.), which is inserted into a SIM/RUIM/USIM interface 128, to communicate with a network. The SIM/RUIM/USIM card 126 is one type of a conventional "smart card" that can be used to identify a user of the communications device 100 and to personalize the communications device 100, among other things. Without the SIM/RUIM/USIM card 126, the communications device 100 may not be fully operational for communication with the wireless network 200, in some embodiments. By inserting the SIM/RUIM/USIM card 126 into the SIM/RUIM/USIM interface 128, a user can access subscribed services. Such subscribed services may include, for example, web browsing and messaging such as e-mail, voice mail, SMS, and Multimedia Messaging Services (MMS).

Software applications 134 may include an e-mail application 136. E-mail application 136 may be any e-mail software program that allows a subscriber or user of the communication device 100 to send and receive e-mail communications. Various alternatives exist for the e-mail application 136, some of which will be mentioned below. Messages that have been sent or received by the user are typically stored in local storage such as flash memory 108 of the communication device 100, or in some other storage element in the communication device 100. In an alternative embodiment, some of the sent and received messages may be stored remotely from the device 100 such as in a data store of an associated host system that the communication device 100 communicates with.

Software applications 134 may also include a text messaging application 137 for sending and receiving Short Message Service (SMS) text messages using device 100. Furthermore, software applications 134 may include a telephony application 148 for supporting various telephony functions on device 100, including various speed dialling functions such as speed dial keys, voice activated dialling, and/or short code dialling.

Still referring to FIG. 1, telephony application 148 may be operatively integrated with (work in concert with) communication subsystem 104, keyboard 116, speaker 118, and microphone 120. Telephony application 148 may also be integrated with address book 142, e-mail application 136, text messaging application 137, Internet browser 138, RAM 106, flash memory 108 and display 110 to perform various other telephony functions on device 100. The device 100 may further include a device state application 140, a Personal Information Manager (PIM) 144, and various other software applications 150 that are also executable by the processor 102.

In general, the software applications 134 such as e-mail application 136 and text messaging application 137, for example, may include sets of machine-readable instructions that are executed by a single processor such as main processor 102.

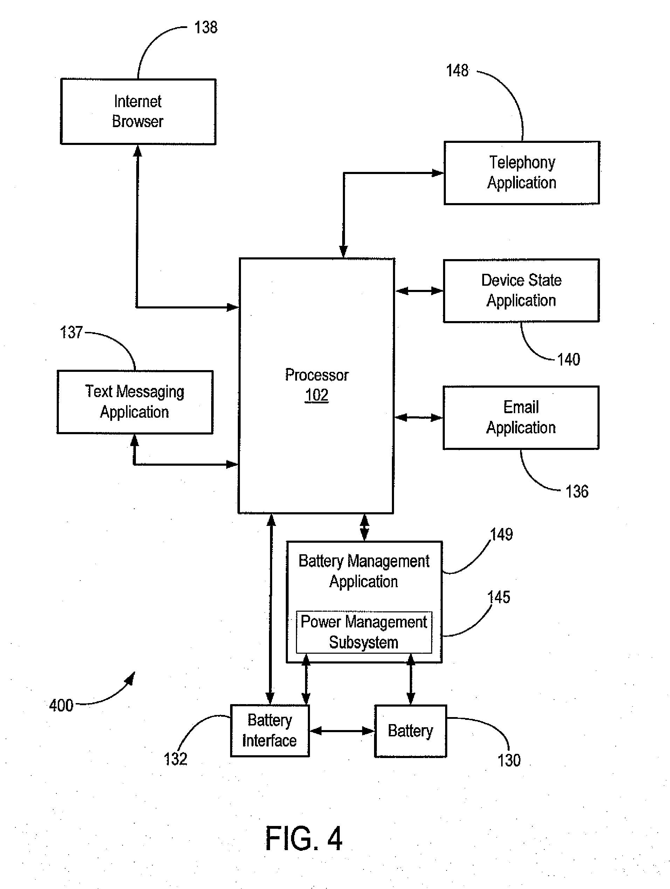

Battery management application 149 (described in more detail below in connection with FIG. 4), communicates with a power management subsystem 145 in electrical communication with battery 130, and/or battery interface 132. The power management subsystem 145 is capable of detecting at least one battery characteristic such as battery voltage, current, impedance or other electrical characteristic, for example, and may be embodied as an integrated circuit, and may be (but need not be) a processor distinct from main processor 102.

The battery management application 149 further communicates with various software applications including e-mail application 136, text messaging application 137, Internet browser 138, telephony application 148, and device state application 140. Battery management application 149 may be configured to control various functions available in the device 100 as the battery charge level begins to fall below one or more battery charge level thresholds, as will be detailed further below. For example, battery management application 149 may disable various functions normally available via one or more of the e-mail application 136, text messaging application 137, and Internet browser 13 8, based on the level of battery charge available. Also, battery management application 149 may force the device 100 into one of several device states via the device state application 140, as will be explained in more detail further detail below.

Additional software applications may also be loaded onto the communication device 100 through at least one of the wireless network 200, the auxiliary I/O subsystem 112, the data port 114, the short-range communications subsystem 122, or other device subsystem 124.

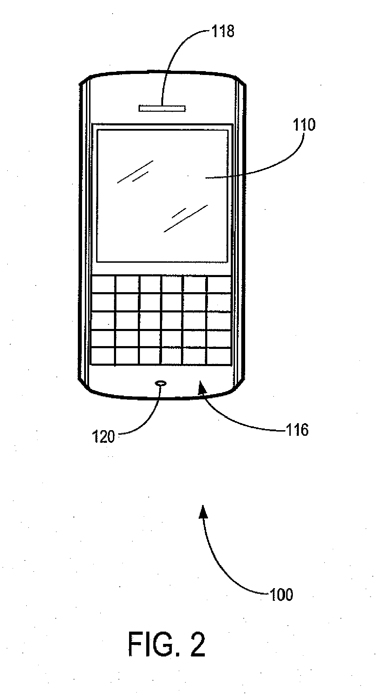

Now referring to FIG. 2, shown is an illustrative front view of a handheld mobile communication device 100 that may provide or contribute to an operating environment for implementation of the concepts described herein. As shown, the communication device 100 may include display 110, and keyboard 116 with one or more input and/or navigation devices (such as a trackball 117 or a touch pad). The display 110 may be configured to display various screens allowing the user of device 100 to view screen outputs from the various software applications 134. Display 110 may also be configured to provide a touch-sensitive screen input in response to a prompt or query displayed on display 110. Device 100 further includes an earpiece or speaker 118 and a microphone 120 in order to support the telephony functions previously described.

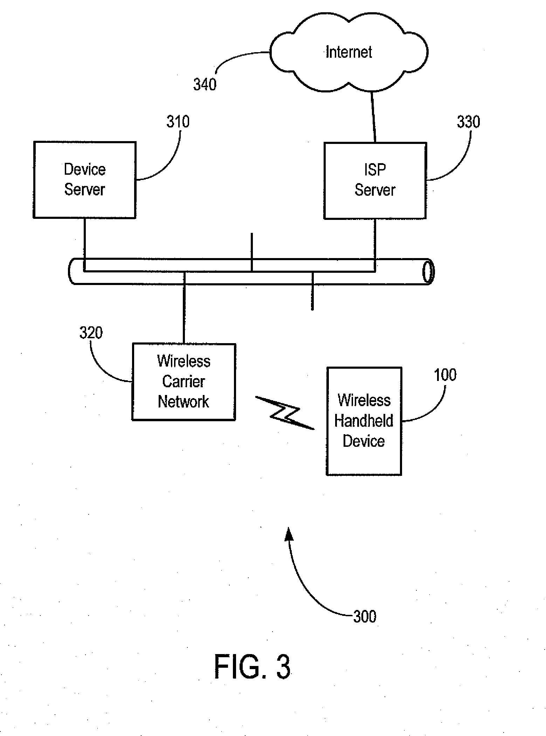

Now referring to FIG. 3, shown is a schematic block diagram of an illustrative network 300, which may provide or contribute to an operating environment for implementation of the concepts described herein. As shown, network 300 includes a device server 310 for hosting various server applications for device 100. Network 300 further includes a wireless carrier network 320 which provides wireless communications between device 100 and device server 310.

Network 300 also includes an ISP server 330 which provides a connection to the Internet 340. With the Internet browser application 138 stored on device 100, a user may access the Internet 340 via the wireless carrier network 320, and the ISP server 330. Alternatively, device 100 may connect to a local wireless network such as Wi-Fi™, using short-range communications subsystem 122. Network 300 is an example of a wireless network that my convey data, such as e-mail messages, to device 100.

Now referring to FIG. 4, shown is a schematic block diagram 400 depicting interaction between some components of the mobile communication device 100. As shown by way of illustration, power management subsystem 145 is operatively interconnected (connected electrically and/or physically so that the components may function together) to battery 130, via battery interface 132. The battery 130 may be a smart battery with an embedded chip configured to perform or enable various battery management and monitoring functions. In this illustrative embodiment, battery management application 149, which communicates with power management subsystem 145, is also in communication with e-mail application 136, text messaging application 137, Internet browser 138, device state application 140, and telephony application 148.

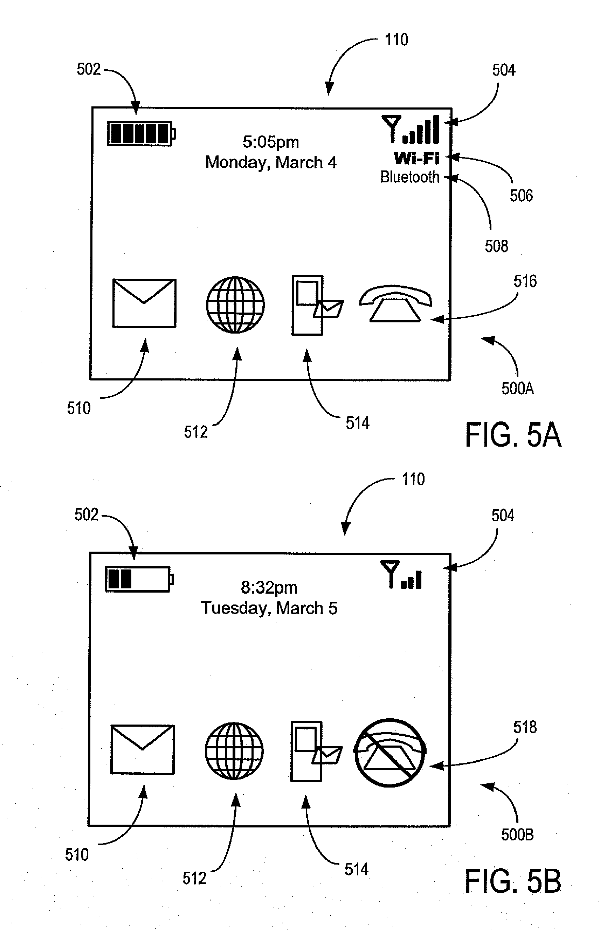

As shown in FIG. 5A, display 110 of device 100 may show various functions enabled on device 100 and also show the status of device resources, such as current battery level 502. Display 110 may also show the strength of the wireless network signal at 504, and whether Wi-Fi 506 and Bluetooth™ 508 are currently enabled on device 100. Display 110 may also show the current availability of various device applications, including e-mail 510, Internet 512, text-messaging 514, and telephony 516. Such information display may comprise, for example, graphics, text, animations, or any combination thereof.

As shown in FIG. 5B, display 110 may also show changes in availability of various device functions, and show changes in the level of device resources. For example, the battery level 502 may be shown to have decreased, and the strength of the wireless network signal at 504 may be shown to be weak in the current location. The absence of Wi-Fi 506 and Bluetooth 508 may be indicated by their absence from display 110. Also, if certain applications are disabled, this may be shown in display 110 by an indicator, such as the disabling of the telephony function as shown at 518 for example. Similar graphic indications may be used to show the status of other device functions and resources.

As will now be explained, battery management application 149 may employ battery management strategies to conserve battery power and extend the life of battery 130. More generally, battery management application 149 may be configured to control and selectively disable one or more functions in one or more of the applications 136, 137, 138 140, 148 in dependence upon (i.e., based upon or as a function of) the employed battery management strategy. Generally speaking, disabling a function may include turning off the function, putting the function into a mode of operation in which it consumes less power, limiting or deactivating one or more capabilities of the function, limiting or deactivating one or more subset functionalities, preventing the function from being executed or any combination.

For example, in an embodiment, battery management application 149 may be configured to set the rate of e-mail polling, or in other words the e-mail polling interval, to check for new e-mail messages accessible via wireless carrier network 320. Execution of an e-mail polling operation requires device 100 to communicate with wireless carrier network 320 via wireless radio transmission and reception, therefore, significant power is required and the charge on the battery 130 will be depleted accordingly.

During normal operation, battery management application 149 may be set to poll for new e-mail messages every X minutes, where X is the polling interval expressed in units of time. In a typical implementation, a device may be set to a default e-mail polling interval, such as for example every 5 minutes, every 10 minutes, or every 15 minutes, etc. Polling need not be specified in units of minutes or in units of time. For example, polling may be expressed as a frequency or rate (such as six polls per hour) or as a function of a unit other than time (such as polling every Y processor cycles), but as a general matter, the polling function can generally be converted to and expressed exactly or approximately in terms of a polling interval. Accordingly, a mobile communication device may poll for new e-mail messages as a function of a polling interval, even if the mobile communication device treats polling in terms of frequency, for example. Further, changes in polling may be expressed in terms of varying the polling interval (e.g., decreasing the polling frequency may be expressed in terms of increasing the polling interval). It will be appreciated that the default polling interval may be set to any interval (or rate or other convertible metric) selected by the battery management application 149, or as specified by the device user or by a system administrator responsible for configuring the device 100, such that incoming e-mail is received at the device 100 within a reasonable amount of time after the e-mail is sent and becomes available for downloading (e.g. from device server 310 or from another e-mail server accessible via wireless carrier network 320).

In another embodiment, the e-mail polling interval may be adjusted to be increased when the charge level of battery 130 goes below a certain threshold. For example, the e-mail polling interval may be set to be reduced to every 20 minutes, every 30 minutes, every hour, etc. Thus, while e-mail polling continues to occur to check for new e-mail messages, the frequency of e-mail polling is significantly reduced. This battery management strategy conserves battery power and increases battery life, as the power intensive data transmission and reception required for e-mail polling is used more sparingly. Also, because the e-mail polling intervals are lengthened, it is also more likely that a new e-mail will be waiting to be downloaded to device 100. As well, the likelihood that there will be more messages to be downloaded at once is also increased. Downloading multiple messages at the same time may conserve battery power, as communication between device 100 and wireless carrier network 320 need not be established each time for each new message.

In another embodiment, the battery management application 149 can also set more than one battery charge level threshold in order to establish multiple e-mail polling intervals which are lengthened as the battery charge of battery 130 continues to decrease. For example, rather than every 20 minutes, 30 minutes or an hour, the polling interval may be set to be every two hours, three hours, or four hours, etc. Further lengthening the e-mail polling interval would further increase the chances of new e-mail waiting to be downloaded, and further increase the likelihood that multiple e-mail messages can be downloaded at the same time. In an embodiment, by way of illustration, the battery charge level thresholds may be set at regular predetermined charge levels, such as 80%, 60%, 40%, and 20%. Alternatively, the battery charge level thresholds may be set at irregular intervals, such as 80%, 50%, 40%, 30%, and 20%, for example. As well, the number of battery charge level thresholds may be increased or decreased depending on the selected battery management strategy, or device user or system administrator preferences.

In another embodiment, rather than have multiple thresholds set up to adjust the e-mail polling interval, battery management application 149 may be configured to adjust the e-mail polling interval proportionately to the battery level. For example, from a fully charged battery level of 100% all the way down to the minimum battery charge level considered to be required for radio transmission and receive functions (e.g. 15% charge), battery management application 149 may adjust the e-mail polling interval inversely so that the e-mail polling interval increases as the charge level of battery 130 approaches the minimum battery charge limit (e.g. 15% charge).

In an embodiment, the e-mail polling interval may be adjusted according to a linear function, such that the e-mail polling interval is steadily increased as the battery charge level decreases.

In another embodiment, the e-mail polling interval may be increased according to some non-linear function, such that the e-mail polling interval is increased at a non-linear rate as the battery charge level approaches the minimum level required for radio operation.

In another embodiment, the e-mail polling interval may be adjusted not only according to the battery charge level, but also according to other characteristics of the battery 130, such as the relative discharge rate. If the battery discharge rate is faster than desired according to the battery management strategy, the e-mail polling interval may be adjusted based on the relative battery discharge rate, regardless of the current level of charge for the battery. For example, in extremely cold weather when batteries consume their charge and are depleted more quickly, the e-mail polling interval may be increased upon triggering a low temperature threshold, even if the battery is currently charged well over 80%. Similarly, as high humidity may affect battery life, a high humidity threshold may trigger an increase in the e-mail polling interval. The low temperature thresold or high humidity threshold may be detected, for example, by the thermometer or barometer in environmental sensor 119.

In another embodiment, the e-mail polling interval may be further adjusted in dependence upon other environmental characteristics that may affect battery life, such as if the signal level of the cell tower is weak, and the likelihood of successfully establishing radio communication between the device 100 and the wireless carrier network 320 is reduced. In this case, the e-mail polling interval may be increased even though the battery charge level may be well over 80%.

In another embodiment, the e-mail polling interval may be further adjusted based on whether or not other device functions are limited or disabled. For example, if the device 100 is currently enabled for Wi-Fi, or for Bluetooth communication in addition to wireless network communications, the e-mail polling interval may be adjusted based on the increased load on the battery 130. That is, the e-mail polling interval may be changed in response to an expected rate of change in the battery charge level resulting from the current availability of various functions in the device.

In another embodiment, below a certain battery charge level threshold, the battery management application 149 may be configured to disable some functions of one or more of the device applications. For example, the battery management application 149 may limit the telephony application 148 function such that incoming calls are received only to display notification on display 110 of device 100, but not to allow the call answer function in order to prevent usage of the device 100 for voice communication. In this case, the incoming call may be directed to a voice-mail system located off the device 100, such as on device server 310. Upon disabling the telephony function of device 100, battery management application 149 may adjust the e-mail polling interval such that the interval is reduced, and therefore e-mail polling is more frequent when compared to the e-mail polling rate before the telephony function is disabled.

In another embodiment, the battery management application 149 may disable Internet browser 138 , thereby disabling Internet access. Upon disabling the telephony function, the e-mail polling interval may once again be adjusted so that the interval is further reduced when compared to the e-mail polling interval before Internet access is disabled.

In another embodiment, the battery management application 149 may further limit or disable a subset of functionality of the e-mail application 136, such disabling the transmission and receipt of large e-mail attachments, such as photo image files or graphically encoded documents. In some implementations, such disablement may be done when the battery charge level reaches a particularly low level, and it is desired to extend at least a portion of the functionality of the e-mail application 136.

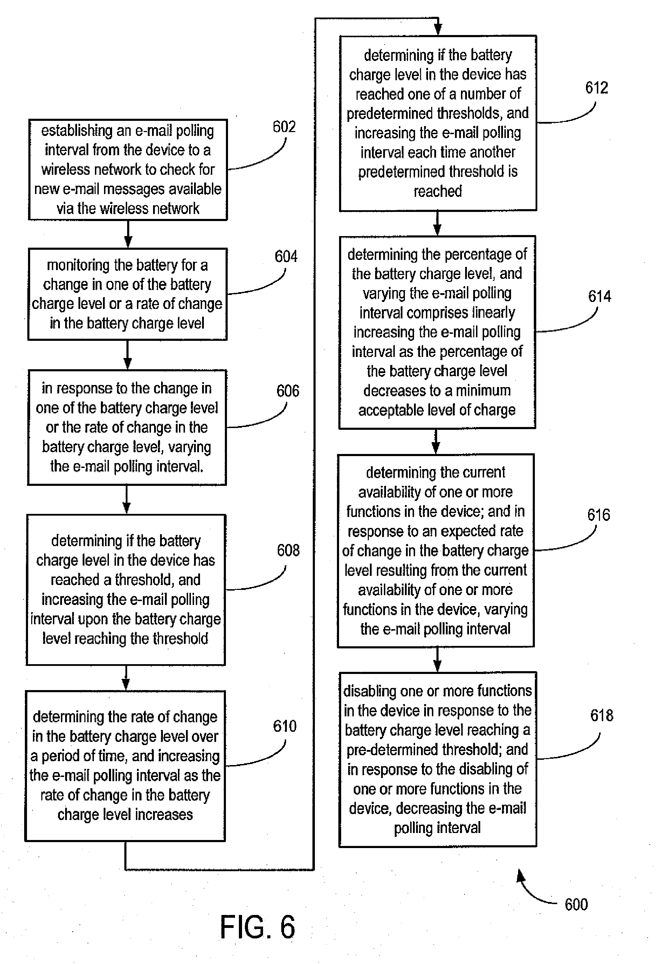

Now referring to FIG. 6, shown is a flow chart of a method 600 in accordance with an embodiment. The method 600 may be embodied as machine-readable instructions (i.e., computer-readable code) that may be stored on a tangible storage element (i.e., a computer-readable medium) and executed by a processor (such as, but not limited to, main processor 102). Many of the operations depicted in FIG. 6 may be optionally conducted in concert with, or in place of, other operations in FIG. 6. As shown, method 600 begins at block 602, where method 600 may perform the optional step of establishing an e-mail polling interval from the device to a wireless network to check for new e-mail messages available via the wireless network. Establishing an e-mail polling interval may comprise, for example, presenting a user with a list of options for polling intervals, receiving the user's selection via an input device, and setting one or more polling intervals in response to the user's selection. Method 600 then proceeds to block 604, where method 600 performs the step of monitoring the battery for a change in one of the battery charge level or a rate of change in the battery charge level. Such monitoring may be done substantially continually or from time-to-time. Monitoring may be realized by monitoring battery voltage or current or impedance or other electrical characteristic. Method 600 then proceeds to block 606, where method 600 performs the step of varying the e-mail polling interval in response to the change in one of the battery charge level or the rate of change in the battery charge level. Some of the ways in which the e-mail polling interval may be changed as a function of the of the battery charge level are set out below.

Method 600 may proceed to block 608, where method 600 performs the optional step of determining if the battery charge level in the device has reached a threshold. The threshold may be any threshold (e.g., a function of charge, voltage, current flow, impedance or any other indicator or indicators of battery charge level), and typically the threshold is pre-determined (settled upon at some time prior to execution of block 608). The threshold (or thresholds) may be expressed in any fashion, such as a value, or a range, or a table of values, or a solution set to an equation, for example. When the threshold is reached, the e-mail polling interval is varied. In a typical implementation, when battery charge level falls below a threshold, the e-mail polling interval is increased.

Method 600 may proceed to block 610, where method 600 performs the optional step of determining the rate of change in the battery charge level over a period of time. The rate of change of battery charge level may be measured or estimated in any number of ways, such as taking the differences of battery charge level values or taking a derivative of a function that approximates battery charge levels. Similarly, mathematical techniques may be used to assess whether the rate of change of battery charge level itself is increasing (e.g., the battery is losing power at a faster rate than previously). In the event the battery charge level is changing, the e-mail polling interval may be varied in response. In a typical implementation, when the rate at which battery charge level falls exceeds a threshold, thereby indicating a rapid decline of the battery charge level, the e-mail polling interval may be increased based upon the rate of change in the battery charge level.

Method 600 may proceed to block 612, where method 600 performs the optional step of determining if the battery charge level in the device has reached one of a number of other thresholds, and varying the e-mail polling interval each time another threshold is reached. In other words, the threshold of step 608 need not be the only threshold. The polling interval may be varied as different thresholds are reached.

Method 600 may proceed to block 614, where method 600 performs the optional step of determining the battery charge level (e.g., by assessing the battery charge level of the battery as a percentage of or in relation to the battery charge level that the battery would have when fully charged), and varying the e-mail polling interval comprises linearly increasing the e-mail polling interval as the percentage of the battery charge level decreases to a minimum acceptable level of charge.

Method 600 may proceed to block 616, where method 600 performs the optional step of determining the current availability of one or more functions in the device; and in response to an expected rate of change in the battery charge level resulting from the current availability of one or more functions in the device, varying the e-mail polling interval. In general, the number of operating functions (such as messaging, telephony, global positioning, and so forth), as well as the power demands of the various functions, affect the rate of change in the battery charge level.

Method 600 may proceed from block 616 to block 618, where method 600 performs the optional step of disabling one or more functions in the device. Disabling may be in response to which functions are operating and their respective power demands, or in response to the battery charge level reaching a threshold or both. As previously indicated, the e-mail polling interval may also be varied in response.

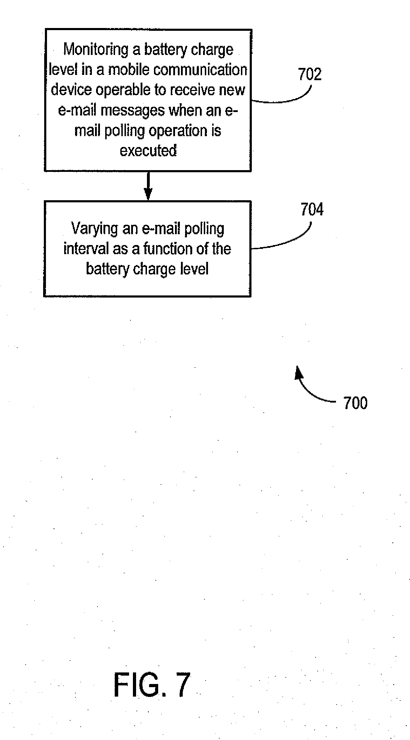

Referring to FIG. 7, shown is a flow chart illustrating an example of a method 700 that may be carried out by software executed by, for example, the processor 102. The method may contain additional or fewer processes than shown and described, and may be performed in a different order. Computer-readable code executable by, for example, the processor 102 of the portable electronic device 100 to perform the method, may be stored in a computer-readable medium.

The method 700 includes: monitoring a battery charge level in a mobile communication device operable to receive new e-mail messages when an e-mail polling operation is executed, as indicated at 702, and varying an email polling interval as a function of the battery charge level, as indicated at 704.

In another aspect, there is provided a computer readable medium including computer readable code for performing battery management in a mobile communication device having e-mail communication capability, the computer readable code comprising: code for establishing an e-mail polling interval from the device to a wireless network to check for new e-mail messages available via the wireless network; code for monitoring the battery for a change in one of the battery charge level or a rate of change in the battery charge level; and code for varying the e-mail polling interval in response to the change in one of the battery charge level or the rate of change in the battery charge level.

In an embodiment, the computer readable code further comprises code for monitoring the battery charge level in the device comprises determining if the battery charge level in the device has reached a pre-determined threshold, and code for varying the e-mail polling interval comprises increasing the e-mail polling interval upon the battery charge level reaching the pre-determined threshold.

In another embodiment, the computer readable code further comprises code for monitoring for a change in the rate of change in the battery charge level comprises determining the rate of change in the battery charge level over a period of time, and code for varying the e-mail polling interval comprises increasing the e-mail polling interval as the rate of change in the battery charge level increases.

In another embodiment, the computer readable code further comprises code for monitoring the battery for a change in the battery charge level comprises determining if the battery charge level in the device has reached one of a number of predetermined thresholds, and code for varying the e-mail polling interval comprises increasing the e-mail polling interval each time another predetermined threshold is reached.

In another embodiment, the computer readable code further comprises code for monitoring the battery for a change in the battery charge level comprises determining the percentage of the battery charge level, and code for varying the e-mail polling interval comprises linearly increasing the e-mail polling interval as the percentage of the battery charge level decreases to a minimum acceptable level of charge.

In another embodiment, the computer readable code further comprises: code for determining the current availability of one or more functions in the device; and code for varying the e-mail polling interval in response to an expected rate of change in the battery charge level resulting from the current availability of one or more functions in the device.

Implementation of one or more embodiments of the concepts may realize one or more benefits, some of which have already been mentioned. Notably, the concepts are flexible, in that they are adaptable to a number of portable electronic devices having a variety of capabilities. The concepts are further readily adaptable to portable electronic devices that include different or supplemental power supplies besides batteries. Further, varying the polling interval as a function of the power supply level (such as a battery charge level) can be implemented by any of several techniques, some of which have been specifically described. The power supply level may be monitored directly or indirectly. For example, the concepts described herein may be implemented in a mobile communication device in which power consumption of device functions is monitored, the consumption being an indicator of the power supply level or the rate of change of the power supply level. Moreover, the concepts described herein may be adaptable to particular users, who may wish to exercise some control over e-mail polling.

Further, the concepts described herein advantageously do not generally exclude other techniques for power conservation or for adjustment of the polling interval. For example, the concepts described herein may support decreasing the polling interval in response to any number of conditions (such as reconnection to a wired power source or connection to a battery charger or swapping depleted batteries for fresh ones).

The prospective advantages may be more apparent in portable electronic devices that are handheld, as such devices may face power management challenges that larger or more bulky devices do not face. The concepts described herein may improve the performance and functionality of the portable electronic device in situations where power conservation is indicated. Not only may such techniques enhance the usefulness or efficiency of the device, they may extend the time for which a user may use the device before recharging or replacing the power supply.

While illustrative embodiments have been described above, it will be appreciated that various changes and modifications may be made. More generally, the scope of the invention is defined by the following claims.

## Claims

1. A method comprising:
monitoring a battery charge level in a mobile communication device (100) operable to receive new e-mail messages when an e-mail polling operation is executed; and
varying an email polling interval as a function of the battery charge level.

2. The method as claimed in claim 1, wherein varying the e-mail polling interval as a function of the battery charge level comprises varying the e-mail polling interval as a function of a rate of change of the battery charge level.

3. The method as claimed in claim 1, wherein monitoring the battery charge level comprises determining if the battery charge level has reached a threshold, and varying the e-mail polling interval comprises increasing the e-mail polling interval when the battery charge level reaches the threshold.

4. The method as claimed in claim 1, wherein monitoring the battery charge level comprises determining the rate of change in the battery charge level over a period of time, and varying the e-mail polling interval comprises increasing the e-mail polling interval as the rate of change in the battery charge level increases.

5. The method as claimed in claim 1, wherein monitoring the battery charge level comprises determining when the battery charge level in the mobile communication device (100) has reached one of a number of thresholds, and varying the e-mail polling interval comprises increasing the e-mail polling interval each time another one of the number of thresholds is reached.

6. The method as claimed in claim 1, wherein the e-mail polling interval is varied linearly.

7. The method as claimed in claim 1, comprising varying the e-mail polling interval in response to an expected rate of change in the battery charge level associated with a device function.

8. The method as claimed in claim 7, wherein the device function is one of: text messaging, Internet browsing and telephony communications executable by a processor (102).

9. The method as claimed in claim 1, wherein when the battery charge level reaches a threshold, disabling a device function and decreasing the e-mail polling interval.

10. A computer-readable medium comprising instructions executable on a processor (102) of the mobile communication device (100) for implementing the method of claim 1.

11. A mobile communication device (100) operable to receive new e-mail messages when an email polling operation is executed, the mobile communication device (100) comprising:
a processor (102) in electrical communication with a battery (130) for monitoring a battery charge level and varying an e-mail polling interval as a function of the battery charge level; and
a memory (108) in electrical communication with the processor (102) and a communication subsystem for storing the e-mail polling interval.

12. A mobile communication device as (100) claimed in claim 11, comprising an integrated circuit in electrical communication with the battery (130) and the processor (102) for determining the battery charge level.

13. A mobile communication device (100) as claimed in claim 11, wherein the e-mail polling interval is varied linearly.

14. The method as claimed in claim 1, wherein the e-mail polling interval is varied in response to an expected rate of change in the battery charge level associated with a device function.

## Amended claims

### Amended claims in accordance with Rule 137(2) EPC.

**1.** A method comprising:
monitoring a battery charge level in a mobile communication device (100) operable to receive new e-mail messages when an e-mail polling operation is executed; and
varying an email polling interval as a function of the expected rate of change of the battery charge level associated with a device function.

**2.** The method as claimed in claim 1, wherein when the battery charge level has reached a threshold, increasing the e-mail polling interval.

**3.** The method as claimed in claim 1, wherein monitoring the battery charge level comprises determining the rate of change in the battery charge level over a period of time, and varying the e-mail polling interval comprises increasing the e-mail polling interval as the rate of change in the battery charge level increases.

**4.** The method as claimed in claim 1, wherein monitoring the battery charge level comprises determining when the battery charge level in the mobile communication device (100) has reached one of a number of thresholds, and varying the e-mail polling interval comprises increasing the e-mail polling interval each time another one of the number of thresholds is reached.

**5.** The method as claimed in claim 1, wherein the e-mail polling interval is varied linearly.

**6.** The method as claimed in any preceding claim, wherein the device function is one of: text messaging, Internet browsing and telephony communications executable by a processor (102).

**7.** The method as claimed in claim 1, wherein when the battery charge level reaches a threshold, disabling a device function and decreasing the e-mail polling interval.

**8.** A computer-readable medium comprising instructions executable on a processor (102) of the mobile communication device (100) for implementing the method of any preceding claim.

**9.** A mobile communication device (100) operable to receive new e-mail messages when an email polling operation is executed, the mobile communication device (100) comprising:
a processor (102) in electrical communication with a battery (130) for monitoring a battery charge level and varying an e-mail polling interval as a function of the expected rate of change of the battery charge level associated with a device function; and
a memory (108) in electrical communication with the processor (102) and a communication subsystem for storing the e-mail polling interval.

**10.** A mobile communication device as (100) claimed in claim 9, comprising an integrated circuit in electrical communication with the battery (130) and the processor (102) for determining the battery charge level.

**11.** A mobile communication device (100) as claimed in claim 9, wherein the e-mail polling interval is varied linearly.
